# EUROPÄISCHE PATENTSCHRIFT

(11) **EP 0 544 870 B1**
(45) Veröffentlichungstag und Bekanntmachung des Hinweises auf die Patenterteilung: **06.09.1995**
(21) Anmeldenummer: 92912675.3
(22) Anmeldetag: 13.06.1992
(51) Int. Cl.: B65G 63/00

(54) **EINRICHTUNG ZUM UMSCHLAGEN VON STÜCKGUT IN FORM VON LADEEINHEITEN WIE CONTAINERN, WECHSELBEHÄLTERN, SATTELANHÄNGERN O.DGL.**
DEVICE FOR TRANSLOADING UNIT LOADS SUCH AS CONTAINERS, SWAP BODIES, SEMITRAILERS OR THE LIKE
AGENCEMENT DE TRANSBORDEMENT DE CHARGES UNITAIRES TELLES QUE CONTENEURS, CAISSES MOBILES, SEMI-REMORQUES OU SIMILAIRES

(30) Priorität: 25.06.1991 DE 4120922
(43) Veröffentlichungstag der Anmeldung: 09.06.1993
(73) Patentinhaber: Krupp Fördertechnik GmbH, 47226 Duisburg (DE)
(72) Erfinder: FÜCHTEY, Heinz, D-45149 Essen (DE); MENDE, Burkhard, D-45134 Essen (DE); SCHMITZ, Theo, D-47228 Duisburg (DE)
(86) Internationale Anmeldenummer: EP9201338
(87) Internationale Veröffentlichungsnummer: WO9300280

(56) Entgegenhaltungen:
- DE-A- 1 556 043
- DE-A- 2 440 682
- FÖRDERN UND HEBEN. Bd. 40, Nr. 8, August 1990, MAINZ (DE), S. 543-544; COHRS: 'Wirtschaftlicher Container-Umschlag mit stationärem Gelenkkran'

## Beschreibung

Die Erfindung betrifft eine Einrichtung zum Umschlagen von Stückgut in Form von Ladeeinheiten wie Containern, Wechselbehältern, Sattelanhängern o.dgl. zwischen Straßen- und Schienenfahrzeugen, mit zumindest einem Lager, das zwischen einem ein- oder mehrgleisigen Schienenverkehrsweg und einem ein- oder mehrspurigen Straßenverkehrsweg angeordnet ist (siehe zum Beispiel die DE-A-2 440 682).

Der Erfindung liegt die Aufgabe zugrunde, eine Einrichtung zu entwickeln, mittels welcher sich der Umschlag von Stückgut zwischen Straße und Schiene, Schiene und Straße bzw. Schiene und Schiene vereinfachen und die Umschlag-Zeitdauer verkürzen läßt.
Die Umschlageinrichtung soll den Einsatz von Linienzügen ermöglichen bzw. wirtschaftlicher gestalten, welche nacheinander zum Be- bzw. Entladen mehrere Bahnhöfe anlaufen, wodurch zeit- und kostenaufwendige Rangiervorgänge für die Zusammenstellung von Zügen mit verschiedenen Zielorten vermieden werden können.
Ein weiteres mit der Erfindung angestrebtes Ziel besteht darin, die Umschlageinrichtung in der Weise auszugestalten, daß sie sich mit grundsätzlich gleichartigen Bestandteilen an unterschiedliche Erfordernisse, insbesondere auch an steigende Umschlagzahlen anpassen läßt.

Die gestellte Aufgabe wird durch eine Umschlageinrichtung gelöst, welche die Merkmale des Anspruchs 1 aufweist.

Der Grundgedanke der Erfindung besteht dabei darin, auf unterschiedlichen Seiten des Schienenverkehrsweges ein Eingangs- und ein Ausgangslager anzuordnen, an welche sich nach außen hin der zugehörige Entlade- bzw. Belade-Straßenverkehrsweg anschließt.
Dem Eingangs- und dem Ausgangslager sowie dem Schienenverkehrsweg sind jeweils mehrere in Längsrichtung verfahrbare Entlade-, Belade- bzw. Zugumschlag-Hebezeuge zugeordnet, deren Arbeitsbereiche - quer zur Verfahrrichtung gesehen - getrennt nebeneinander liegen:
Zur Beförderung der Ladeeinheiten zwischen den Arbeitsbereichen der Entlade- bzw. Belade- und der Zugumschlag-Hebezeuge sind seitlich neben dem Schienenverkehrsweg Zusatzfördermittel angeordnet, welche zumindest auch die erforderliche Transportbewegung quer zum Schienenverkehrsweg ausführen oder ermöglichen.
Durch die Verwendung voneinander getrennter Lager mit zugehörigem Straßenverkehrsweg läßt sich der Umschlag insofern vereinfachen und beschleunigen, als die Straßenfahrzeuge den Umschlagbereich nicht gleichzeitig mit dem Zug erreichen müssen. Das Eingangs- und das Ausgangslager dienen dabei als Puffer, mit denen außerdem eine gewünschte Transportfolge beim Übergang auf den Zug bzw. auf die Straße herbeigeführt werden kann.
Da die Arbeitsbereiche der den jeweiligen Straßenverkehrsweg und den Schienenverkehrsweg bedienenden Hebezeuge voneinander getrennt sind, können diese - den Erfordernissen im jeweils zugehörigen Arbeitsbereich entsprechend - unabhängig voneinander zum Umschlag eingesetzt werden.
Mit Rücksicht auf einen möglichst ungestörten Zu- bzw. Abfluß an Ladeeinheiten umfaßt der Straßenverkehrsweg im Normalfall zumindest zwei Entlade- bzw. Belade-Fahrspuren, wobei die innere (d.h. dem Eingangs- bzw. dem Ausgangslager benachbarte) Fahrspur als Standspur dient.

Die Zugbearbeitung läßt sich dadurch vereinfachen und beschleunigen, daß die Anzahl der Zugumschlag-Hebezeuge größer ist als diejenige der Entlade- oder der Belade-Hebezeuge.

Die Zusatzfördermittel können an sich beliebig beschaffen sein, sofern sie geeignet sind, die Ladeeinheiten zumindest zwischen den voneinander getrennten Arbeitsbereichen der Entlade-, Belade- und Zugumschlag-Hebezeuge zu befördern.
Bei einer bevorzugten Ausführungsform des Erfindungsgegenstandes sind die Zusatzfördermittel als nach Art eines horizontal ausgerichteten Paternosters arbeitende, zweistöckig umlaufende Palettenbänder ausgebildet, die sich - zumindest innerhalb des Eingangs- bzw. des Ausgangslagers liegend - seitlich bis in den Arbeitsbereich der Entlade- bzw. Belade-Hebezeuge und der Zugumschlag-Hebezeuge erstrecken und deren Breite in Lager-Längsrichtung an die Länge der größtmöglichen Ladeeinheit angepaßt ist (Anspruch 2).

Vorzugsweise ragen die Palettenbänder beidseitig in Richtung auf den Schienenverkehrsweg und den benachbarten Entlade- bzw. Belade-Straßenverkehrsweg über das Eingangs- bzw. das Ausgangslager hinaus (Anspruch 3).
Dies hat den Vorteil, daß die zugehörigen Hebezeuge beim Umschlag von der bzw. auf die Straße und auf die bzw. von der Schiene lediglich kurz bemessene Querwege ausführen müssen: Zumindest ein wesentlicher Teil des erforderlichen Quertransports und das gezielte Bereitstellen (Sortieren mit direktem Zugriff) der Ladeeinheiten wird von den Palettenbändern bewirkt, von denen im Normalfall jeweils mehrere in Längsrichtung des Schienenverkehrsweges nebeneinander liegen.
Der erwähnte Aufbau nach Art eines Paternosters hat neben einer Vergrößerung des nutzbaren Lagerraums zur Folge, daß die Paletten stets Bestandteil der Zusatzfördermittel bleiben und dementsprechend der zusätzliche Transport von Leerpaletten entfällt.

Die Umschlagleistung und Betriebssicherheit lassen sich dadurch verbessern, daß die Hebezeuge jeweils aus einem Laufkran mit einem einen Spreader tragenden Teleskopausleger bestehen, wobei der Spreader bezüglich des Teleskopauslegers und dieser bezüglich des Kranträgers jeweils drehbar und dazu versetzt schwenkbar ist (Anspruch 4). Bedingt durch den Fortfall der üblicherweise vorhandenen Hubseile werden unerwünschte Pendelbewegungen der Ladeeinheiten weitestgehend vermieden und schnellere Positioniervorgänge ermöglicht.
Durch Betätigen des Teleskopauslegers lassen sich auch ohne Verschiebung des Kranträgers Transportbewegungen ausführen.
Die Verwendung eines auf einer aufgeständerten Kranführung verfahrbaren Laufkrans hat die Einsparung ansonsten erforderlicher Portalstützen und damit gleichzeitig eine Verringerung der bei Fahrvorgängen zu beschleunigenden Masse zur Folge.

Vorzugsweise sind die in Fahrtrichtung aufeinanderfolgenden, benachbarten Teleskopausleger (also diejenigen der Entlade- bzw. Belade- bzw. Zugumschlag-Hebezeuge) quer zur Fahrtrichtung gegeneinander versetzt angeordnet, so daß ihre Drehachsen an dem betreffenden Laufkran eine unterschiedliche Lage einnehmen (Anspruch 5). Diese Ausbildung - bei welcher die Drehachsen benachbarter Teleskopausleger in Fahrtrichtung nicht in einer Linie hintereinander liegen - erleichtert bzw. ermöglicht das Zusammenwirken benachbarter gleichartiger Hebezeuge beispielsweise bei der gemeinsamen Handhabung (insbesondere Drehung) großer Ladeeinheiten.

Die Umschlageinrichtung läßt sich unter dem Gesichtspunkt der Wirtschaftlichkeit besonders gut betreiben, falls für zwei Palettenbänder des Eingangs- oder des Ausgangslagers jeweils ein Zugumschlag-Hebezeug vorgesehen ist (Anspruch 6). Der damit erzielte Vorteil besteht darin, daß ein Palettenband einen geeigneten Lagerplatz bereitstellen kann, während das Zugumschlag-Hebezeug das andere Palettenband bedient.
Die zuvor skizzierte Umschlageinrichtung (Ansprüche 1 bis 5) kann insbesondere in der Weise ausgestaltet sein, daß sie einen zweigleisigen Schienenverkehrsweg aufweist (Anspruch 7).

Abweichend von den bisher beschriebenen Ausführungsmöglichkeiten kann der Erfindungsgegenstand auch derart ausgestaltet sein, daß sich zumindest ein Zusatzfördermittel zwischen dem Eingangs- bzw. demAusgangslager und dem Schienenverkehrsweg befindet, also getrennt vom Eingangs- und Ausgangslager beiderseits des Schienenverkehrsweges. Das Zusatzfördermittel ist dabei nach Art eines flachliegenden Paternosters mit in einer Ebene umlaufenden Mitnahmeflächen für Ladeeinheiten aufgebaut, wobei die Aufnahmeflächen im Umlenkabschnitt eine Bewegung in Richtung auf den Schienenverkehrsweg bzw. von diesem weg ausführen und wobei die Längsachse jedes Zusatzfördermittels parallel zum Schienenverkehrsweg oder Eingangs- bzw. Ausgangslager ausgerichtet ist (Anspruch 8). Der Vorteil dieser Ausgestaltung besteht auch darin, daß die im Normalfall waagerecht liegenden Mitnahmeflächen außerhalb der Umlenkabschnitte (im Anfangs- und Endbereich des Paternosters) im Sinne eines Verteilers wirksam werden können, mit dem sich Ladeeinheiten bezüglich des Schienenverkehrsweges oder beispielsweise des Ausgangslagers in einer gewünschten Reihenfolge zusammenstellen lassen. Da die Mitnahmeflächen in jedem Fall auch eine Querbewegung ausführen, können das Eingangs- und das Ausgangslager ggf. auch besonders einfach, d.h. beispielsweise als passive Lager, ausgestaltet sein.

Jeder Umlenkabschnitt ist vorzugsweise derart ausgeführt, daß dort jeweils drei Mitnahmeflächen - quer zur Längsrichtung des Schienenverkehrsweges gesehen - unmittelbar nebeneinander liegen könnten; jedoch sind dort immer nur zwei Mitnahmeflächen vorhanden sowie die einer Mitnahmefläche größenmäßig entsprechende Leerstelle. Dies hat zur Folge, daß der gegenseitige Abstand der inneren (dem Schienenverkehrsweg benachbarten) und äußeren Mitnahmeflächen außerhalb der Umlenkabschnitte zumindest der Breite einer Mitnahmefläche entspricht.
Dem Einsatzzweck gemäß ist jede Mitnahmefläche größenmäßig an die größtmögliche Ladeeinheit, d.h. an deren Platzbedarf auf der betreffenden Mitnahmefläche, angepaßt (Anspruch 9).

Mit Rücksicht auf den Einsatz der Paternoster-Mitnahmeflächen können das Eingangs- und das Ausgangslager jeweils als Flachlager ausgebildet sein, dessen Lagerfläche in Längs- und Querrichtung in Flächeneinheiten entsprechend dem Platzbedarf oder der Hälfte des Platzbedarfs für die größtmögliche Ladeeinheit unterteilt ist (Anspruch 10). Diese Unterteilung der Lagerfläche vereinfacht die Zusammenstellung von Ladeeinheiten und deren Umschlag in einer gewünschten Reihenfolge.
Die Unterteilung der Flächeneinheiten in zwei Flächenhälften ist zweckmäßig, um insbesondere einen weitgehend automatisierten Umschlagbetrieb auch mit kleineren Ladeeinheiten verwirklichen zu können.
Im einfachsten Fall können die Flächeneinheiten der Flachlager mittels geeigneter Markierungen (beispielsweise mechanischer oder optischer Art) festgelegt werden.

Die Entlade-, Belade- und Zugumschlag-Hebezeuge können beliebig ausgestaltet sein, sofern sie in Richtung auf die umlaufenden Mitnahmeflächen einen ausreichend bemessenen Arbeitsbereich aufweisen.
Unter dem Gesichtspunkt der Wirtschaftlichkeit sind dabei zumindest die Entlade- und die Belade-Hebezeuge als mit Laufkatzen und Spreadern ausgestattete Laufkrane ausgebildet, deren Arbeitsbereich zur Seite hin zumindest die äußeren Mitnahmeflächen des zumindest einen zugehörigen Zusatzfördermittels mitumfaßt (Anspruch 11).
Die Laufkatzen müssen danach eine Querbewegung ausführen können, mittels der Ladeeinheiten in den Bereich der äußeren Mitnahmeflächen beförderbar oder von diesen abnehmbar sind.

Die Zugumschlag-Hebezeuge können u.U. in der bereits beschriebenen Weise mit Teleskopauslegern ausgestattet sein (vgl. Anspruch 4 und/oder 5).
Vorzugsweise sind die Zugumschlag-Hebezeuge ebenfalls als Laufkrane ausgebildet, die jeweils zwei Laufkatzen nebst Spreader aufweisen und deren Arbeitsbereich zur Seite hin zumindest die inneren Mitnahmeflächen der Zusatzfördermittel mitumfaßt (Anspruch 12). Dabei ist eine Laufkatze für die Beladung und die andere Laufkatze für die Entladung des Zuges vorgesehen. Die Handhabung und Arbeitsweise des Laufkrans läßt sich ggf. dadurch optimieren, daß dieser steuerungstechnisch mit den benachbarten Zusatzfördermitteln gekoppelt ist; auf diese Weise kann erreicht werden, daß die zu übergebende bzw. zu übernehmende Ladeeinheit bezüglich des Laufkrans bereits eine günstige, vorgegebene Position auf einer der Mitnahmeflächen einnimmt.
Die Laufkatzen sind vorzugsweise so dicht über dem Schienenverkehrsweg angeordnet, daß nur kurze Hubbewegungen mit kleiner freier Seillänge ausgeführt werden müssen.

Die hier angesprochene Ausführungsform (vgl. die Ansprüche 8 bis 12) kann auch mit einem eingleisigen Schienenverkehrsweg ausgestattet sein (Anspruch 13). Der dem Eingangs- und dem Ausgangslager zugeordnete Entlade- bzw. Belade-Straßenverkehrsweg sollte zur Vermeidung von Störungen und Zeitverzögerungen so beschaffen sein, daß zumindest zwei nebeneinanderliegende Fahrspuren vorhanden sind, von denen die innen liegende Fahrspur als Standspur zum Ent- oder Beladen der Straßenfahrzeuge dient. Falls die Umschlageinrichtung dreispurige Straßenverkehrswege aufweist, können ggf. auch die beiden innen liegenden Fahrspuren als Standspuren verwendet werden.

Einer der wesentlichen Vorteile der Erfindung ist darin zu sehen, daß die Umschlageinrichtung modular aufgebaut ist und sich dementsprechend an unterschiedliche Erfordernisse, insbesondere an steigende Umschlagzahlen, anpassen läßt.
Ein Modul umfaßt dabei neben den beiden Passivlagern mit zwei horizontal umlaufenden Paternoster-Mitnahmeflächen bzw. zwei zweistöckig umlaufenden Palettenbändern (ohne Passivlager), dem Schienenverkehrsweg und den beiderseitigen Straßenverkehrswegen die erforderlichen Entlade-, Belade- und Zugumschlag-Hebezeuge.

Eine Besonderheit der Umschlageinrichtung besteht darin, daß der Zug während des Bearbeitungsvorgangs (Beladen und/oder Entladen) nicht unbedingt angehalten werden muß, sondern mit einer an den Bearbeitungsumfang angepaßten, vorgegebenen Geschwindigkeit durch die Umschlageinrichtung hindurchbewegt wird; durch diese Vorgehensweise können zeitraubende Transportbewegungen in Längsrichtung des Schienenfahrwegs vermieden werden, da die zugehörigen Güterwagen jeden Abschnitt des Eingangs- bzw. Ausgangslagers passieren müssen. Der Aufbau und die Betriebssicherheit der Umschlageinrichtung lassen sich dabei dadurch verbessern, daß der zu bearbeitende Zug zumindest im Bereich der Umschlageinrichtung mittels einer geeigneten Antriebseinheit (Zug- und/oder Schubeinheit) bewegt wird, so daß beispielsweise auf die Ausstattung mit einem Oberleitungsnetz verzichtet werden kann.

Die Erfindung wird nachfolgend anhand zweier in der Zeichnung dargestellter Ausführungsbeispiele im einzelnen erläutert.
Es zeigen:
- Fig. 1: schematisiert eine Draufsicht ohne Überdachung einer Umschlageinrichtung mit einem zweigleisigen Schienenverkehrsweg sowie einem Eingangs- und einem Ausgangslager, die jeweils mehrere Zusatzfördermittel in Form querliegender Palettenbänder aufweisen,
- Fig. 2: in gegenüber Fig. 1 vergrößertem Maßstab einen Querschnitt durch die Umschlageinrichtung,
- Fig. 3a,b: in gegenüber Fig. 2 vergrößertem Maßstab Teilquerschnitte durch die Umschlageinrichtung im Bereich des Schienenverkehrsweges bzw. des Entlade-Straßenverkehrsweges,
- Fig. 4: schematisiert einen Querschnitt durch eine Ausführungsform einer Umschlageinrichtung mit einem eingleisigen Schienenverkehrsweg, einem als Flachlager ausgebildeten Eingangs- und Ausgangslager sowie seitlich neben dem Schienenverkehrsweg angeordneten Verteilern in Gestalt von Paternoster-Mitnahmeflächen,
- Fig. 5: schematisiert ohne Überdachung eine Teildraufsicht auf die linke Hälfte der Umschlageinrichtung gemäß Fig. 4,
- Fig. 6a bis d: schematisiert verschiedene Arbeitszustände beim Umschlag von Ladeeinheiten im Bereich des Schienenverkehrsweges und
- Fig. 7: schematisiert in Gestalt eines Flußdiagramms die verschiedenen Arbeitsvorgänge im Bereich einer Umschlageinrichtung gemäß Fig. 4.

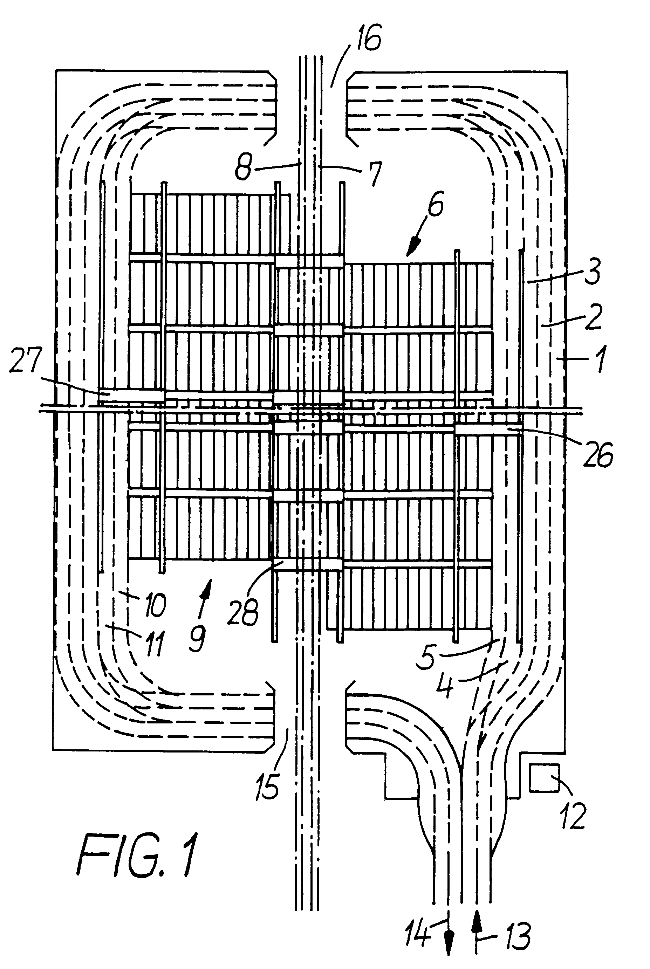

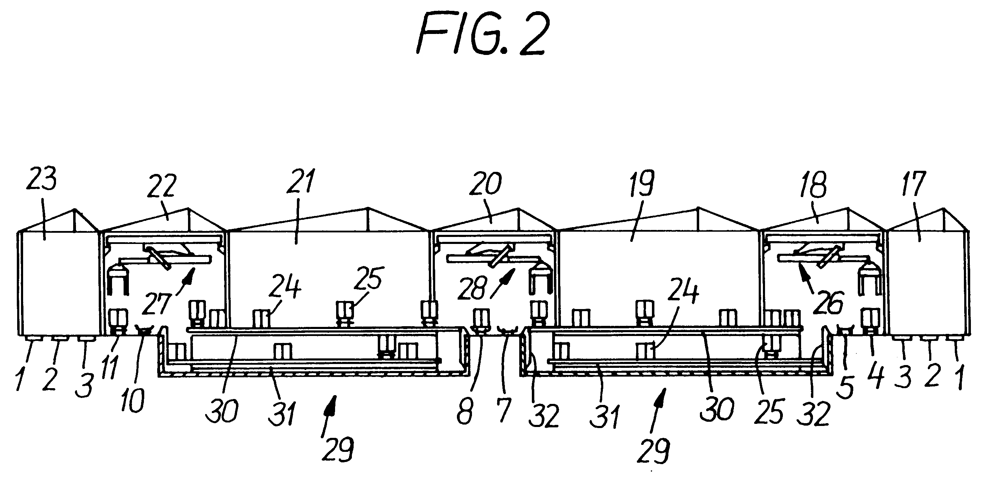

Die in Fig. 1 dargestellte Umschlageinrichtung weist - von rechts nach links gesehen (vgl. dazu Fig. 2) - die folgenden Bestandteile und Vorrichtungen auf:
einen außenliegenden Zubringer- und Verteiler-Straßenverkehrsweg mit drei nebeneinanderliegenden Zubringer-Fahrspuren 1 bis 3, einen Entlade-Straßenverkehrsweg mit zwei nebeneinanderliegenden Entlade-Fahrspuren 4 und 5, ein sich seitlich anschließendes Eingangslager 6, einen Schienenverkehrsweg mit zwei nebeneinanderliegenden Gleisen 7 und 8, ein sich seitlich anschließendes Ausgangslager 9, einen Belade-Straßenverkehrsweg mit zwei nebeneinanderliegenden Belade-Fahrspuren 10 und 11 und - sich seitlich anschließend - die bereits erwähnten äußeren Zubringer-Fahrspuren 1 bis 3.
Die zu entladenden bzw. beladenden Straßenfahrzeuge (beispielsweise Lastkraftwagen, Sattelschleppereinheiten) fahren im Bereich einer Einweisungsstelle 12 in den Bereich der Umschlageinrichtung ein (Pfeil 13) und verlassen diese dort wieder (Pfeil 14).
Im Anschluß an die Einweisungsstelle 12 können die Straßenfahrzeuge entweder unmittelbar über die Entlade-Fahrspuren 4, 5 den Bereich des Eingangslagers 6 oder zunächst auf den Zubringer-Fahrspuren 1 bis 3 nach Umfahren des Eingangslagers über die Belade-Fahrspuren 10 und 11 den Bereich den Ausgangslagers 9 ansteuern. Die entladenen bzw. beladenen Straßenfahrzeuge können zum Umfahren des Ausgangslagers 9 wieder auf die Zubringer-Fahrspuren 1 bis 3 wechseln bzw. diese nach Verlassen des Ausgangslagers 9 unmittelbar wieder anfahren.
Die Straßenverkehrswege bilden einen kreuzungsfreien Einbahnring ohne Gegenverkehr. Dies wird auch dadurch ermöglicht, daß der Schienenverkehrsweg mit den Gleisen 7 und 8 mittels Brücken 15 und 16 die Zubringer-Fahrspuren 1 bis 3 überquert.
Die Einweisungsstelle dient dazu, den einlaufenden Straßenfahrzeugen die für den Umschlagvorgang zuweckmäßigsten Standorte im Bereich des Eingangs- bzw. Ausgangslagers 6 und 9 zuzuweisen.
Wie insbesondere Fig. 2 erkennen läßt, ist die Umschlageinrichtung insgesamt überdacht; sie weist - quer zur Längserstreckung der Gleise 7 und 8 gesehen - sieben nebeneinanderliegende Überdachungsabschnitte 17 bis 23 auf. Die Überdachung dient dem Schutz gegen Witterungseinflüsse und schirmt die Umgebung gegen Lärm ab.

Das Umsetzen der zu handhabenden Ladeeinheiten - bei denen es sich beispielsweise um Container 24 und Sattelanhänger 25 (vgl. Fig. 2) handelt - zwischen den Entlade-Fahrspuren 4, 5 und dem Eingangslager 6, bzw. zwischen dem Ausgangslager 9 und den Belade-Fahrspuren 10 und 11 bzw. zwischen den Gleisen 7, 8 und dem Eingangslager 6 oder dem Ausgangslager 9 erfolgt mittels zweier Entlade-Hebezeuge 26 bzw. zweier Belade-Hebezeuge 27 bzw. einer größeren Anzahl Zugumschlag-Hebezeuge 28; letztere sind im mittleren Überdachungsabschnitt 20 oberhalb der Gleise 7 und 8 in deren Längsrichtung verfahrbar abgestützt.

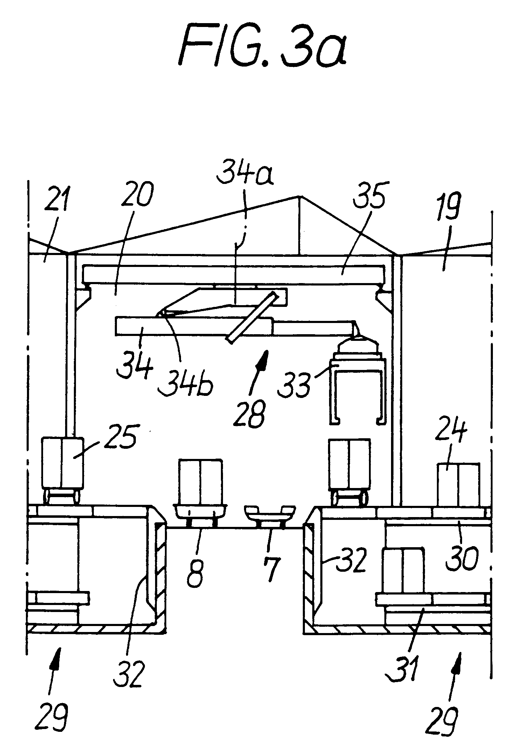

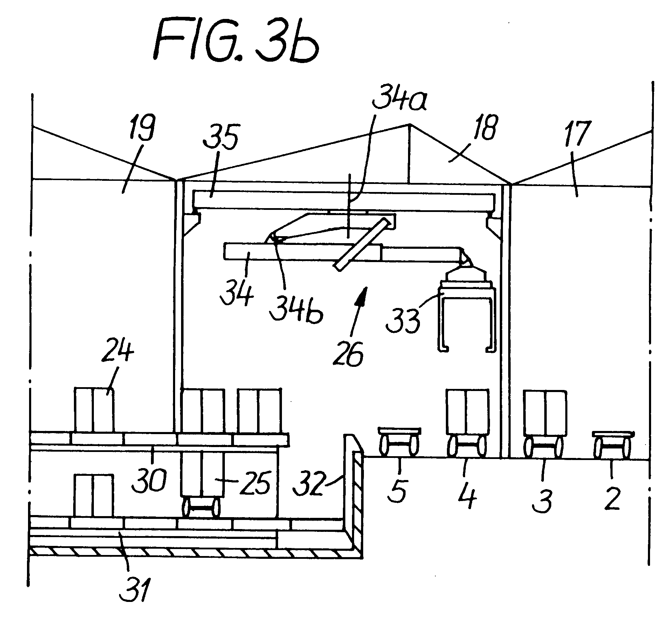

In dem in Rede stehenden Ausführungsbeispiel sind die Hebezeuge 26 bis 28 derart ausgebildet, daß sich ihre Arbeitsbereiche lediglich über einen kleinen Teil der Breite des Eingangslagers 6 bzw. Ausgangslagers 9 erstrecken und sich dementsprechend nicht überlappen. Ein Teil der Querbewegung zur Überbrückung des Abstandes zwischen den Arbeitsbereichen der Hebezeuge 26 und 28 bzw. 28 und 27 wird daher mittels eines Zusatzfördermittels bewirkt, mit dem die zu handhabenden Ladeeinheiten 24, 25 dem Arbeitsbereich der Zugumschlag-Hebezeuge 28 bzw. der Belade-Hebezeuge 27 zugeführt werden.
In dem in Rede stehenden Ausführungsbeispiel (vgl. dazu insbesondere Fig. 2, 3a,b) sind die Zusatzfördermittel - auch unter dem Gesichtspunkt einer vergrößerten Lagerkapazität - als zweistöckig umlaufende Palettenbänder 29 ausgebildet, die nach Art eines horizontal ausgerichteten Paternosters arbeiten. Die Palettenbänder setzen sich aus Paletten 29a zusammen, die entlang einer obere Führungsbahn 30 bzw. unteren Führungsbahn 31 verschiebbar sind und außerhalb des Überdachungsabschnitts 19 bzw. 21 neben der inneren Fahrspur 5 bzw. 10 und neben den Gleisen 7, 8 eine Umlenkbewegung ausführen; in deren Verlauf wird jeweils eine Palette 29a auf das Niveau der unteren Führungsbahn 31 abgesenkt bzw. der oberen Führungsbahn 30 angehoben.
Die Abstützung der Paletten 29a im Umlenkbereich erfolgt über Seitenführungen 32 (vgl. dazu Fig. 3a) bzw. über parallel zur Zeichenebene verlaufende, nicht dargestellte Führungsbänder.
Abhängig von der Umlaufrichtung der Palettenbänder 29 führen die zugehörigen Ladeeinheiten 24, 25 taktweise eine Querbewegung aus und gelangen durch diese beispielsweise aus dem Bereich des Überdachungsabschnitts 18 neben das Gleis 7 bzw. aus dem Bereich des Überdachungsabschnitts 20 neben die innere Belade-Fahrspur 10 (im Überdachungsabschnitt 22).
Wie Fig. 2 erkennen läßt, ist die Länge der Palettenbänder 29 quer zu den Gleisen 7,8 größer als die Breite des zugehörigen Überdachungsabschnitts 19 bzw. 21 für das Eingangslager 6 bzw. Ausgangslager 9. Die Breite der Palettenbänder in Längsrichtung der Gleise 7, 8 ist an die Länge der größtmöglichen Ladeeinheit angepaßt.

Die Entlade-, Belade- und Zugumschlag-Hebezeuge 26 bis 28 (vgl. dazu auch Fig. 3a,b) bestehen jeweils aus einem Laufkran mit einem einen Spreader 33 tragenden Teleskopausleger 34; dieser ist seinerseits an einem Kranträger 35 in Längsrichtung, also senkrecht zur Zeichenebene, verfahrbar abgestützt.
Der Teleskopausleger kann um die Achsen 34a und 34b bezüglich des Kranträgers 35 Dreh- und Schwenkbewegungen ausführen; entsprechendes gilt für den Spreader 33 bezüglich des Teleskopauslegers 34.
Während die Hebezeuge 26 und 27 dazu dienen, Ladeeinheiten innerhalb des Überdachungsabschnitts 18 bzw. 22 zwischen den Entlade- oder Belade-Fahrspuren 4, 5 bzw. 10, 11 und dem benachbarten Palettenband 29 zu handhaben, werden die im Überdachungsabschnitt 20 befindlichen Zugumschlag-Hebezeuge 28 dazu eingesetzt, Züge 36 und 37 entweder zu be- oder entladen.

Die Einsatzmöglichkeit der zuvor beschriebenen Hebezeuge (mit Teleskopauslegern 34) läßt sich dadurch ggf. verbessern, daß in Fahrtrichtung aufeinanderfolgende, benachbarte gleichartige Hebezeuge (also die Entlade- bzw. Belade- oder die Zugumschlag-Hebezeuge) quer zur Fahrtrichtung versetzt gegeneinander angeordnete Teleskopausleger 34 aufweisen: Deren Drehachsen 34a nehmen also an dem Kranträger 35 eine unterschiedliche Lage ein, d.h. sie liegen - in Fahrtrichtung gesehen - nicht in einer Linie hintereinander.
Zur Erläuterung des geschilderten Sachverhalts sei beispielsweise auf die Darstellung gemäß Fig. 3a hingewiesen. Abweichend davon befinden sich die Drehachsen 34a in Fahrtrichtung benachbarter Teleskopausleger 34 nicht in der Mitte des jeweils zugehörigen Kranträgers 35, sondern liegen abwechselnd entweder in Richtung auf den Überdachungsabschnitt 19 oder den Überdachungsabschnitt 21 verschoben. Diese gegeneinander versetzte Anordnung der Teleskopausleger 34 ermöglicht bzw. erleichtert das Zusammenwirken bei der gemeinsamen Handhabung größerer Ladeeinheiten.

Bei der in Fig. 1 dargestellten Ausführungsform des Erfindungsgegenstandes ist die Anzahl der Zugumschlag-Hebezeuge 28 so groß, daß ein Zugumschlag-Hebezeug 28 jeweils zwei Palettenbänder 29 bedient. Allgemein sollte die Anzahl der Zugumschlag-Hebezeuge 28 größer sein als diejenige der Entlade- bzw. Belade-Hebezeuge 26 und 27.

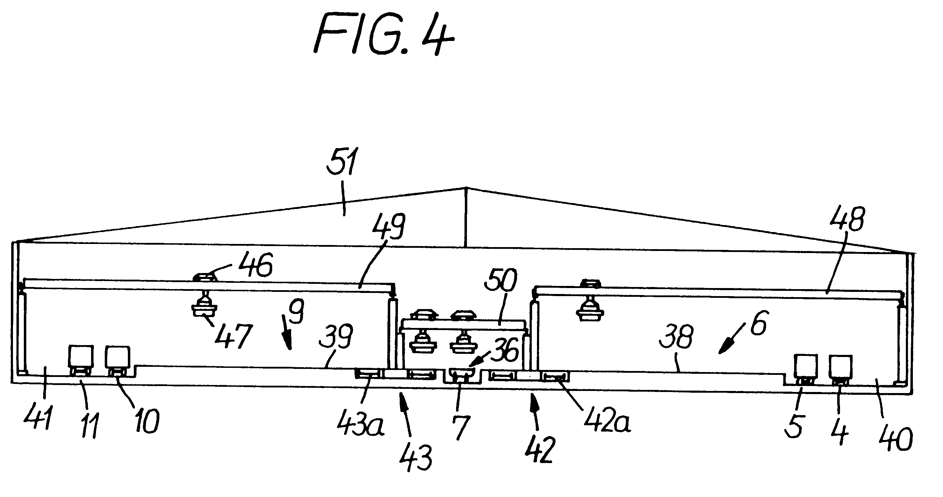

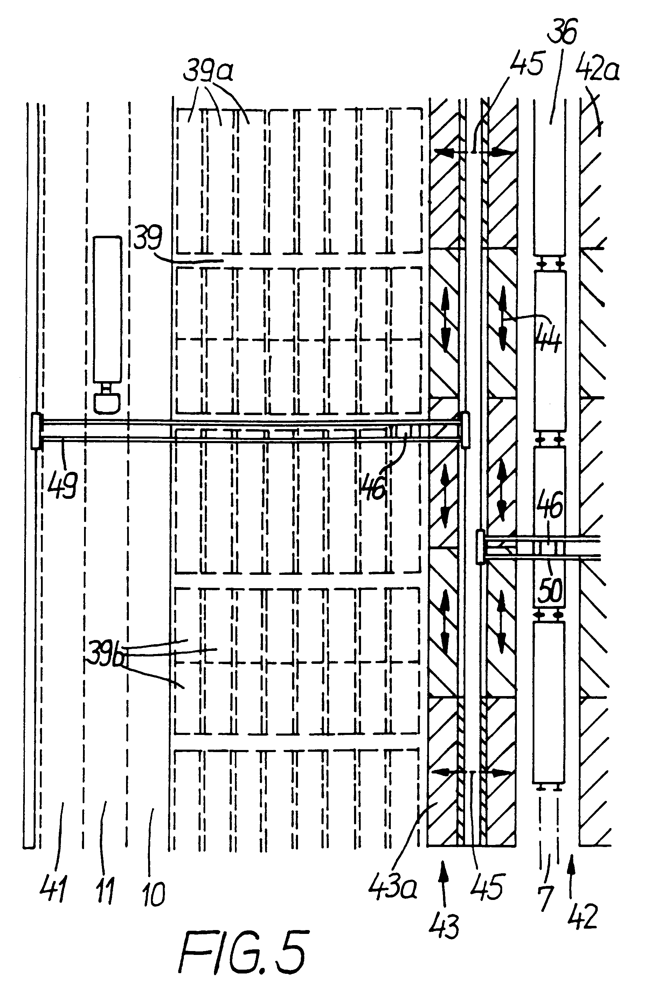

Bei der Ausführungsform gemäß Fig. 4 sind das Eingangs- und das Ausgangslager jeweils als Flachlager mit ortsfester Lagerfläche 38 bzw. 39 ausgebildet, an die sich seitlich drei Entlade- bzw. Belade-Fahrspuren 5, 4, 40 bzw. 10, 11, 41 und als Verteiler 42, 43 wirksame Zusatzfördermittel anschließen. Jede Lagerfläche (beispielsweise die in Fig. 5 dargestellte Lagerfläche 39 des Ausgangslagers 9) ist in Längs- und Querrichtung in Flächeneinheiten 39a bzw. 39b unterteilt, deren Größe dem Platzbedarf für die größtmögliche Ladeeinheit oder der Hälfte dieses Platzbedarfs (vgl. die Flächeneinheiten 39b) entspricht.
Zwischen den einander gegenüberliegenden Verteilern 42 und 43 ist ein Gleis 7 für einen zu ent- bzw. beladenden Zug 36 verlegt.

Jeder Verteiler 42 bzw. 43 ist nach Art eines flachliegenden Paternosters mit in einer Ebene umlaufenden Mitnahmeflächen 42a bzw. 43a für Ladeeinheiten aufgebaut.
Die Mitnahmeflächen bewegen sich - abhängig von der gewählten Umlaufrichtung - im wesentlichen parallel um Gleis 7 (vgl. die Doppelpfeile 44) und führen lediglich im Umlenkabschnitt (d.h. Anfangs- und Endbereich des Verteilers) eine Querbewegung (vgl. die Doppelpfeile 45) in Richtung auf das Gleis 7 oder von diesem weg aus.

Jeder Verteiler ist dabei in der Weise ausgebildet, daß im Umlenkabschnitt jeweils drei Mitnahmeflächen 42a bzw. 43a nebeneinander liegen; der gegenseitige Abstand zwischen den äußeren und den inneren Mitnahmeflächen außerhalb des Umlenkabschnitts entspricht daher zumindest der Breite einer Mitnahmefläche; diese ist im übrigen größenmäßig an die größtmögliche Ladeeinheit angepaßt.

Die Entlade-, Belade- und Zugumschlag-Hebezeuge 26 bis 28 sind jeweils als mit Laufkatzen 46 und Spreadern 47 ausgestattete Laufkrane ausgebildet, die an Kranträgern 48, 49 bzw. 50 parallel zum Gleis 7 hin- und herverfahrbar sind.
Zur Beschleunigung des Umschlagvorgangs im Bereich des Gleises 7 weist der Kranträger 50 des Zugumschlag-Hebezeugs 28 (im Gegensatz zu den Kranträgern 48, 49) jeweils zwei Laufkatzen 46 auf.
Ausweislich der Fig. 4 und 5 sind die Kranträger 48 und 49 so bemessen, daß der Arbeitsbereich dieser Hebezeuge die äußeren Mitnahmeflächen 42a bzw. 43a der Verteiler 42, 43 mitumfaßt; der durch die Kranträger 50 vorgegebene Arbeitsbereich der Zugumschlag-Hebezeuge 28 erstreckt sich seitlich über die inneren Mitnahmeflächen 43a bzw. 42a hinaus. Durch die Ausgestaltung und gegenseitige Zuordnung der Hebezeuge 26 bis 28 und Verteiler 42, 43 ist sichergestellt, daß zu handhabende Ladeeinheiten aus dem Arbeitsbereich der Entlade-Hebezeuge in denjenigen der Zugumschlag-Hebezeuge bzw. aus deren Arbeitsbereich in denjenigen der Belade-Hebezeuge überführt werden können.
Der Länge der Umschlageinrichtung entsprechend können in Längsrichtung des Gleises 7 (entsprechend der Ausführungsform gemäß Fig. 1) jeweils mehrere Verteiler 42 bzw. 43 modular hintereinander angeordnet sein.

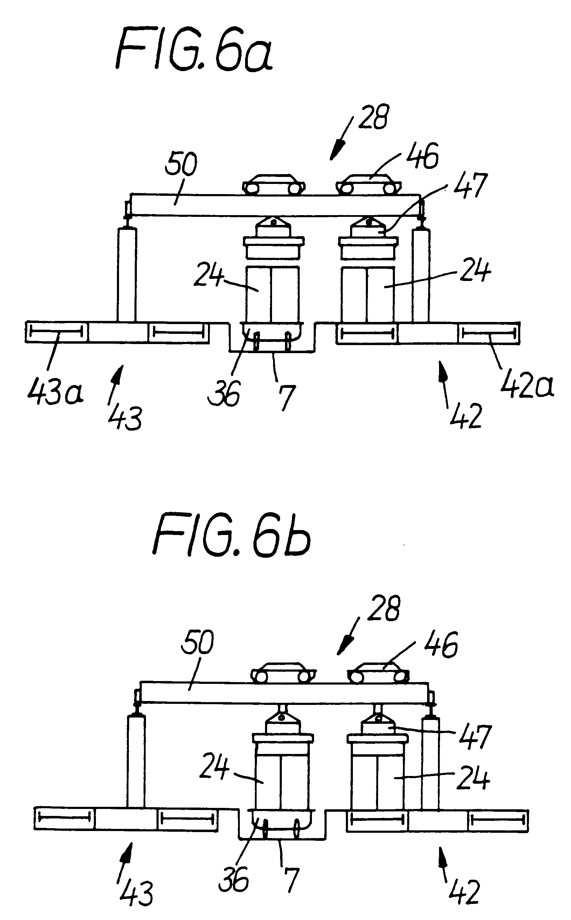

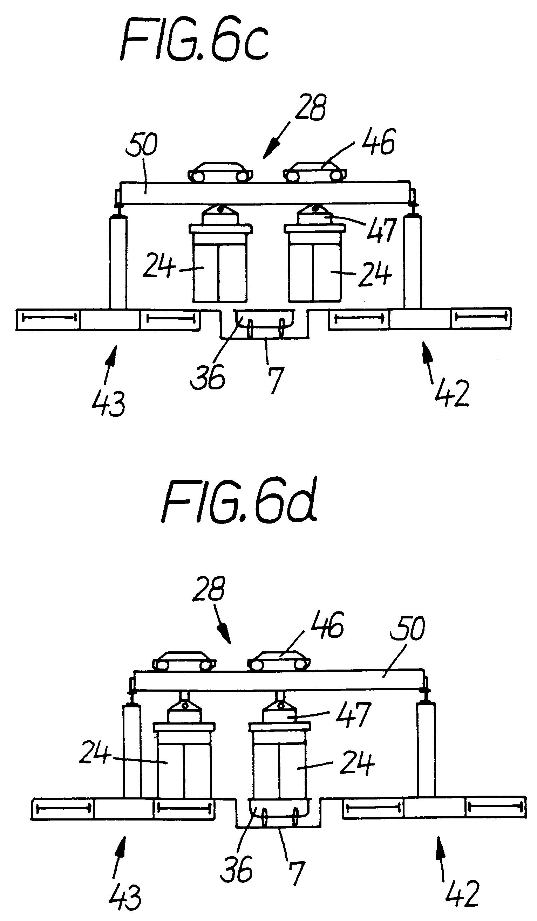

Das mit zwei Laufkatzen 46 und Spreadern 47 ausgestattete Zugumschlag-Hebezeug 28 kann folgendermaßen betrieben werden:
In der Ausgangslage (Fig. 6a) ist ein Zug 36 in die Umschlageinrichtung eingefahren und zum Stillstand gekommen. Der Verteiler 42 paßt sich währenddessen der Wagenfolge des Zuges an; das Hebezeug 28 fährt in eine erste Umschlagstellung ein, die Spreader 47 senken sich ab und verbinden sich mit den zu handhabenden Ladeeinheiten 24 (Fig. 6b). Diese werden anschließend angehoben und in eine neue Umschlagstellung befördert (Fig. 6c); dort werden sie wieder abgesenkt (Fig. 6d) und schließlich von den Spreadern 47 freigesetzt, bevor das Zugumschlag-Hebezeug 28 weiterbewegt wird.

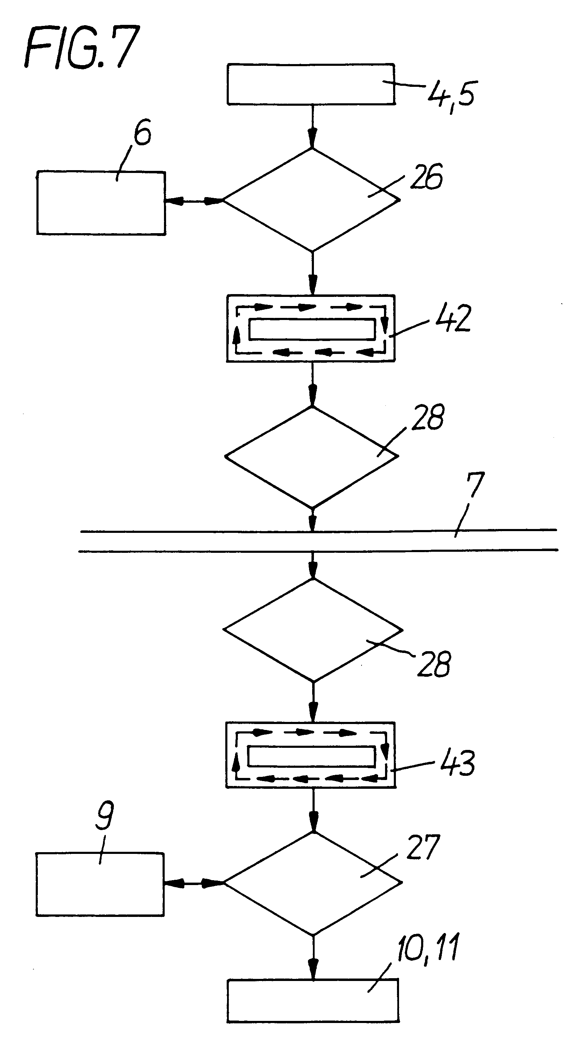

Aus dem in Fig. 7 dargestellten Flußdiagramm sind die Funktionen und Umschlagvorgänge der Ausführungsform gemäß Fig. 4 bis 6 ableitbar:
Die zu handhabenden Ladeeinheiten werden aus dem Bereich der Entlade-Fahrwege 4, 5 mittels der Entlade-Hebezeuge 26 dem Eingangslager 6 bzw. einem Verteiler 42 zugeführt und können durch Einsatz der Zugumschlag-Hebezeuge 28 in den Bereich des Gleises 7 transportiert werden.
Beim Entladen eines Zuges ergibt sich die umgekehrte Reihenfolge. Mittels der Zugumschlag-Hebezeuge 28 werden Ladeeinheiten aus dem Bereich des Gleises 7 in den Bereich der Verteiler 43 überführt und können von dort aus unter Einwirkung der Belade-Hebezeuge entweder zunächst im Ausgangslager 9 abgelegt oder unmittelbar dem Bereich der Belade-Fahrspuren 10, 11 zugeführt werden.

Bei der Ausführungsform gemäß Fig. 4 erstreckt sich eine Überdachung 51 bis in den Bereich seitlich neben den äußeren Fahrspuren 40 bzw. 41.

## Patentansprüche

1. Einrichtung zum Umschlagen von Stückgut in Form von Ladeeinheiten wie Containern, Wechselbehältern, Sattelanhängern o.dgl. zwischen Straßen- und Schienenfahrzeugen, mit zumindest einem Lager (6 bzw. 9), das zwischen einem ein- oder mehrgleisigen Schienenverkehrsweg (7, 8) oder einem ein- oder mehrspurigen Straßenverkehrsweg (4, 5 bzw. 10, 11) angeordnet ist, **dadurch gekennzeichnet**, daß auf unterschiedlichen Seiten des Schienenverkehrsweges (7, 8) ein Eingangs- und ein Ausgangslager (6 bzw. 9) liegen, deren vom Schienenverkehrsweg (7, 8) abgewandter Außenseite ein dem Entladen bzw. Beladen von Straßenfahrzeugen dienender Entlade- bzw. Belade-Straßenverkehrsweg (4, 5 bzw. 10, 11) benachbart ist;
daß das Eingangs- und das Ausgangslager (6 bzw. 9) jeweils mehrere in Längsrichtung verfahrbare Entlade- bzw. Belade-Hebezeuge (26 bzw. 27) aufweisen, mit denen Ladeeinheiten (24, 25) außerhalb des Schienenverkehrsweges (7, 8) zwischen dem Entlade- bzw. dem Belade-Straßenverkehrsweg (4, 5 bzw. 7, 8) und zumindest dem benachbarten Eingangs- bzw. Ausgangslager (6 bzw. 9) transportierbar sind;
daß oberhalb des Schienenverkehrsweges (7, 8) in dessen Längsrichtung verfahrbar mehrere Zugumschlag-Hebezeuge (28) angebracht sind, deren Arbeitsbereich sich seitlich über den Schienenverkehrsweg (7, 8) hinaus in Richtung auf das Eingangs- und das Ausgangslager (6 bzw 9) erstrecken; und
daß sich seitlich neben dem Schienenverkehrsweg (7, 8) Zusatzfördermittel (21 bzw. 42, 43) befinden, welche die voneinander getrennten Arbeitsbereiche der Entlade- bzw. der Belade-Hebezeuge (26 bzw. 27) einerseits und der Zugumschlag-Hebezeuge (28) andererseits überbrücken und mittels derer Ladeeinheiten (24, 25) zumindest auch quer zum Schienenverkehrsweg (7, 8) transportierbar sind.

2. Einrichtung nach Anspruch 1, dadurch gekennzeichnet, daß die Zusatzfördermittel als nach Art eines horizontal ausgerichteten Paternosters arbeitende, zweistöckig umlaufende Palettenbänder (29) ausgebildet sind, die sich - zumindest innerhalb des Eingangs- bzw. des Ausgangslagers (6 bzw. 9) liegend - seitlich bis in den Arbeitsbereich der Entlade- bzw. Belade-Hebezeuge (26 bzw. 27) und der Zugumschlag-Hebezeuge (28) erstrecken und deren Breite in Lager-Längsrichtung an die Länge der größtmöglichen Ladeeinheit (24, 25) angepaßt ist.

3. Einrichtung nach Anspruch 2, dadurch gekennzeichnet, daß die Palettenbänder (29) beidseitig in Richtung auf den Schienenverkehrsweg (7, 8) und den benachbarten Entlade- bzw. Belade-Straßenverkehrsweg (4, 5 bzw. 10, 11) über das Eingangs- bzw. das Ausgangslager (6 bzw. 9) hinausragen.

4. Einrichtung nach zumindest einem der vorhergehenden Ansprüche, dadurch gekennzeichnet, daß die Hebezeuge (26, 27 bzw. 28) jeweils aus einem Laufkran mit einem einen Spreader (33) tragenden Teleskopausleger (34) bestehen, wobei der Spreader (33) bezüglich des Teleskopauslegers (34) und dieser bezüglich des Kranträgers (35) jeweils drehbar und dazu versetzt schwenkbar ist.

5. Einrichtung nach Anspruch 4, dadurch gekennzeichnet, daß die in Fahrtrichtung aufeinanderfolgenden, benachbarten Teleskopausleger (34) quer zur Fahrtrichtung gegeneinander versetzt angeordnet sind, so daß ihre Drehachsen (34a) an dem betreffenden Laufkran (Kranträger 35) eine unterschiedliche Lage einnehmen.

6. Einrichtung nach zumindest einem der vorhergehenden Ansprüche, dadurch gekennzeichnet, daß die Anzahl der Zugumschlag-Hebezeuge (28) so groß ist, daß ein Zugumschlag-Hebezeug (28) jeweils zwei Palettenbänder (29) bedient.

7. Einrichtung nach zumindest einem der vorhergehenden Ansprüche, dadurch gekennzeichnet, daß der Schienenverkehrsweg (7, 8) zweigleisig ausgebildet ist.

8. Einrichtung nach Anspruch 1, dadurch gekennzeichnet, daß sich zwischen dem Eingangs- bzw. dem Ausgangslager (6 bzw. 9) und dem Schienenverkehrsweg (7) jeweils zumindest ein Zusatzfördermittel (42 bzw. 43) befindet, das nach Art einen flachliegenden Paternosters mit in einer Ebene umlaufenden Mitnahmeflächen (42a bzw. 43a) für Ladeeinheiten (24, 25) aufgebaut ist, wobei die Mitnahmeflächen im Umlenkabschnitt eine Bewegung in Richtung auf den Schienenverkehrsweg bzw. von diesem weg ausführen (Doppelpfeile 45) und wobei die Längsachse jedes Zusatzfördermittels (42 bzw. 43) parallel zum Schienenverkehrsweg (7) oder Eingangs- bzw. Ausgangslager (6 bzw. 9) ausgerichtet ist.

9. Einrichtung nach Anspruch 8, dadurch gekennzeichnet, daß jede Mitnahmefläche (42a bzw. 43a) größenmäßig an die größtmögliche Ladeeinheit (24, 25) angepaßt ist.

10. Einrichtung nach zumindest einem der Ansprüche 1 und 8 bis 9, dadurch gekennzeichnet, daß das Eingangs- und das Ausgangslager (6 bzw. 9) jeweils als Flachlager ausgebildet sind, dessen Lagerfläche (38 bzw. 39) in Längs- und Querrichtung in Flächeneinheiten (beispielsweise 39a bzw. 39b) entsprechend dem Platzbedarf oder der Hälfte des Platzbedarfs für die größtmögliche Ladeeinheit (24, 25) unterteilt ist.

11. Einrichtung nach zumindest einem der Ansprüche 1 und 8 bis 10, dadurch gekennzeichnet, daß zumindest die Entlade- und die Belade-Hebezeuge (26 bzw. 27) als mit Laufkatzen (46) und Spreadern (47) ausgestattete Laufkrane ausgebildet sind, deren Arbeitsbereiche zur Seite hin zumindest die äußeren Mitnahmeflächen (42a bzw. 43a) des zumindest einen zugehörigen Zusatzfördermittels (42 bzw. 43) mitumfassen.

12. Einrichtung nach zumindest einem der Ansprüche 1 und 8 bis 11, dadurch gekennzeichnet, daß die Zugumschlag-Hebezeuge (28) als Laufkrane ausgebildet sind, die jeweils zwei Laufkatzen (46) nebst Spreader (47) aufweisen und deren Arbeitsbereiche zur Seite hin zumindest die inneren Mitnahmeflächen (42a bzw. 43a) der Zusatzfördermittel (42 bzw. 43) mitumfassen.

13. Einrichtung nach zumindest einem der Ansprüche 8 bis 12, dadurch gekennzeichnet, daß der Schienenverkehrsweg (7) eingleisig ausgebildet ist.

## Claims

1. Device for transloading unit loads in the form of containers, detachable containers, semi-trailers and similar between road and rail vehicles, with at least one storage facility (6 or 9) disposed between a single- or multi-track rail route (7, 8) and a single- or multi-lane road route (4, 5 or 10, 11), characterised in that on different sides of the rail route (7, 8) an incoming and an outgoing storage facility (6 and 9 respectively) are located with an unloading and loading road route (4, 5 and 10, 11 respectively) for unloading and loading road vehicles lying adjacent to their outside facing away from the rail route (7, 8); that the incoming and the outgoing storage facility (6 and 9 respectively) each have several sets of unloading and loading hoisting gear (26 and 27 respectively), which may be driven in longitudinal direction and by means of which loading units (24, 25) may be transported outside the rail route (7, 8) between the unloading or loading road route (4, 5 or 7, 8) and at least to the adjacent incoming or outgoing storage facility (6 or 9); that above the rail route (7, 8), several sets of train transloading hoisting gear (28) are arranged to travel in its longitudinal direction, their working areas extending laterally beyond the rail route (7, 8) in the direction of the incoming or outgoing storage facility (6 or 9); and that laterally adjacent to the rail route (7, 8), additional transport means (21 or 42, 43) are located, which span the separate working areas of the unloading or loading hoisting gear (26 or 27) on the one side and the train transloading hoisting gear (28) on the other side, and by means of which loading units (24, 25) may be transported at least also transversely to the rail route (7, 8).

2. Device according to Claim 1, characterised in that the additional transport means are constructed as pallet belts (29) circulating on two levels and operating in the manner of a horizontally aligned paternoster, and extending - at least inside the incoming or outgoing storage facility (6 or 9) - laterally into the working area of the unloading or loading hoisting gear (26 or 27) and the train transloading hoisting gear (28), and their width in the longitudinal direction of the storage facility is adapted to the length of the largest possible loading unit (24, 25).

3. Device according to Claim 2, characterised in that the pallet belts (29) protrude on both sides in the direction of the rail route (7, 8) and the adjacent unloading or loading road route (4, 5 or 10, 11) and beyond the incoming or outgoing storage facility (6 or 9).

4. Device according to at least one of the preceding claims, characterised in that the sets of hoisting gear (26, 27 or 28) each consist of a mobile crane with a telescopic boom (34) carrying a spreader (33), said spreader (33) being rotatable relative to the telescopic boom (34) and slewable in a manner offset thereto and the telescopic boom being rotatable relative to the crane support (35) and slewable offset thereto.

5. Device according to Claim 4, characterised in that the adjacent telescopic booms (34) arranged one after the other in the direction of travel are staggered in relation to one another transversely to the direction of travel so that their rotational axes (34a) assume a different position on the respective travelling crane (crane support 35).

6. Device according to at least one of the preceding claims, characterised in that the number of the sets of trains transloading hoisting gear (28) is so great that one train transloading hoisting gear (28) operates two respective pallet belts (29).

7. Device according to at least one of the preceding claims, characterised in that the rail route (7, 8) is double-track.

8. Device according to Claim 1, characterised in that at least one additional transport means (42 or 43) is located between the incoming or outgoing storage facility (6 or 9) and the rail route (7), which is constructed in the manner of a flat paternoster with take-up areas (42a or 43a) circulating in one plane for the loading units (24, 25), in which case the take-up areas in the return section move in the direction of the rail route or away from this (double arrows 45), and the longitudinal axis of each additional transport means (42 or 43) is aligned in parallel to the rail route (7) or the incoming or outgoing storage facility (6 or 9).

9. Device according to Claim 8, characterised in that each take-up area (42a or 43a) is adapted to the size of the largest possible loading unit (24, 25).

10. Device according to at least one of Claims 1 and 8 to 9, characterised in that the incoming and outgoing storage facilities (6 and 9 respectively) are each constructed as flat storage units, the storage area (38 and 39 respectively) of which is divided longitudinally and transversely into area units (e.g. 39a and 39b respectively) corresponding to the space requirement or half the space requirement of the largest possible loading unit (24, 25).

11. Device according to at least one of Claims 1 and 8 to 10, characterised in that at least the unloading and the loading hoisting gear (26 and 27 respectively) are equipped with travelling cranes fitted with crabs (46) and spreaders (47), the working ranges of which encompass to the side at least the outer take-up areas (42a and 43a respectively) of the at least one corresponding additional transport means (42 and 43 respectively).

12. Device according to at least one of Claims 1 and 8 to 11, characterised in that the train transloading hoisting gear (28) are constructed as travelling cranes, which each have two crabs (46) as well as spreaders (47) and the working ranges of which encompass to the side at least the inner take-up areas (42a and 43a respectively) of the additional transport means (42 and 43 respectively).

13. Device according to at least of Claims 8 to 12, characterised in that the rail route (7) is single-track.

## Revendications

1. Installation pour le transbordement de marchandises sous forme d'unités de chargement, telles que des conteneurs, des caisses mobiles, des semi-remorques ou similaires entre des véhicules ferroviaires et routiers comprenant au moins un entrepôt (6 resp. 9) disposé entre une route (4, 5 resp. 10, 11) à une ou plusieurs voies et un chemin de fer (7, 8) à une ou plusieurs voies, caractérisée en ce que de part et d'autre du chemin de fer (7, 8) sont disposés un entrepôt d'arrivée (6) et un de départ (9) dont la face externe détournée du chemin de fer (7, 8) est à proximité d'une route de déchargement respectivement de chargement (4, 5, respectivement 10, 11) servant au déchargement respectivement au chargement de véhicules routiers,
en ce que l'entrepôt d'arrivée et celui de départ (6 respectivement 9) présentent plusieurs engins de levage (26 respectivement 27) pour le déchargement respectivement le chargement mobiles longitudinalement, avec lesquels des unités de chargement (24, 25) peuvent être transportées à l'extérieur du chemin de fer (7, 8) entre la route de déchargement respectivement de chargement (4, 5, respectivement 10, 11) servant au déchargement respectivement au chargement et au moins l'entrepôt voisin d'arrivée respectivement de départ (6, 9) ;
en ce qu'au-dessus du chemin de fer (7, 8) sont disposés, de manière à se déplacer dans le sens longitudinal de ce dernier, plusieurs engins de levage (28) pour le transbordement depuis le train, dont les zones de travail s'étendent latéralement au-delà du chemin de fer (7, 8) en direction de l'entrepôt d'arrivée et de celui de départ (6 respectivement 9) ; et
en ce que latéralement à côté du chemin de fer (7, 8) se trouvent des moyens de transport supplémentaires (21 respectivement 42, 43) qui franchissent les zones de travail séparées entre elles, d'une part, des engins de levage (26 respectivement 27) pour le déchargement respectivement pour le chargement, d'autre part, des engins de levage (28) pour le transbordement depuis le train et au moyen desquels des unités de chargement (24, 25) peuvent également être transportées au moins transversalement au chemin de fer (7, 8).

2. Installation selon la revendication 1, caractérisée en ce que les moyens de transport supplémentaires sont constitués par des bandes transporteuses à palettes (29) tournantes, biétagées et fonctionnant à la manière d'un pater-noster orienté à l'horizontale, qui s'étendent, au moins entre l'entrepôt d'arrivée respectivement celui de départ (6, 9), latéralement jusqu'à la zone de travail des engins de levage (26 respectivement 27) pour le déchargement respectivement le chargement et des engins de levage (28) pour le transbordement depuis le train et dont la largeur est adaptée, dans le sens longitudinal des entrepôts, à la longueur de l'unité de chargement (24, 25) la plus grande possible.

3. Installation selon la revendication 2, caractérisée en ce que les bandes transporteuses à palettes (29) dépassent bilatéralement en direction du chemin de fer (7, 8) et de la route (4, 5 respectivement 10, 11) de déchargement respectivement de chargement, au-delà de l'entrepôt d'arrivée respectivement celui de départ (6 respectivement 9).

4. Installation selon l'une des revendications précédentes, caractérisée en ce que les engins de levage (26, 27 respectivement 28) se composent chacun d'un chariot roulant muni d'une flèche télescopique (34) portant un agrippeur (33), l'agrippeur (33) par rapport à la flèche télescopique (34) et cette dernière par rapport à la poutre de grue (35) étant rotatifs et pivotants de manière décalée.

5. Installation selon la revendication 4, caractérisée en ce que les flèches télescopiques (34) voisines les unes des autres en se suivant dans le sens de la marche sont disposées transversalement au sens de la marche en décalé les unes par rapport aux autres, de sorte que leurs axes de rotation (34a) prennent une position différente sur la grue roulante considérée (poutre de grue 35).

6. Installation selon au moins l'une des revendications précédentes, caractérisée en ce que les engins de levage (28) pour le transbordement depuis le train sont en nombre suffisant pour qu'un engin de levage (28) pour le transbordement depuis le train puisse desservir deux bandes transporteuses à palettes (29).

7. Installation selon au moins l'une des revendications précédentes, caractérisée en ce que le chemin de fer (7, 8) est à deux voies.

8. Installation selon la revendication 1, caractérisée en ce qu'entre l'entrepôt d'arrivée respectivement celui de départ (6 respectivement 9) et le chemin de fer (7) se trouve au moins un moyen de transport supplémentaire (42 respectivement 43) qui est construit à la manière d'un pater-noster à plat avec des surfaces d'entraînement (42a respectivement 43a) circulant sur un plan pour des unités de chargement (24, 25), les surfaces d'entraînement exécutant, dans la partie de renvoi, un déplacement pour se rapprocher de la voie ou bien s'en éloigner (double flèche 45) et l'axe longitudinal de chaque moyen de transport supplémentaire (42 respectivement 43) étant orienté parallèlement au chemin de fer (7) ou à l'entrepôt d'arrivée respectivement de départ (6 respectivement 9).

9. Installation selon la revendication 8, caractérisée en ce que chaque surface d'entraînement (42a respectivement 43a), de par les dimensions, est adaptée à l'unité de chargement la plus grande possible (24, 25).

10. Installation selon au moins l'une des revendications 1 et 8 a 9, caractérisée en ce que l'entrepôt d'arrivée respectivement celui de départ (6 respectivement 9) sont conçus comme des entrepôts plats dont la surface de stockage (38 respectivement 39) est divisée, dans le sens longitudinal et transversal, en unités de surface (par exemple 39a respectivement 39b) correspondant à l'encombrement ou à la moitié de l'encombrement de l'unité de chargement la plus grande possible (24, 25).

11. Installation selon au moins l'une des revendications 1 et 8 à 10, caractérisée en ce qu'au moins les engins de levage (26 respectivement 27) pour le déchargement et le chargement sont constitués par des grues roulantes qui sont munies de chariots roulants (46) et d'agrippeurs (47) et dont les zones de travail englobent, vers le côté au moins, les surfaces d'entraînement externes (42a respectivement 43a) au moins du moyen de transport supplémentaire considéré (42 respectivement 43).

12. Installation selon au moins l'une des revendications 1 et 8 à 11, caractérisée en ce que des grues roulantes, qui font office d'engins de levage (28) pour le transbordement depuis le train, présentent chacune deux chariots roulants (46) et des agrippeurs (47) et leurs zones de travail englobent, vers le côté, au moins les surfaces d'entraînement internes (42a respectivement 43a) des moyens de transport supplémentaire (42 respectivement 43).

13. Installation selon l'une des revendications 8 à 12, caractérisée en ce que le chemin de fer (7) est à une voie.
